(19) Europäisches Patentamt

European Patent Office

Office européen des brevets

(11) EP 1 736 811 A1

(12) **EUROPEAN PATENT APPLICATION**

(43) Date of publication:
27.12.2006 Bulletin 2006/52

(21) Application number: 06012564.8

(22) Date of filing: 19.06.2006

(51) Int Cl.:
*G02B 26/08* (2006.01)　　*G02B 26/10* (2006.01)

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: 20.06.2005 JP 2005179929

(71) Applicant: **CANON KABUSHIKI KAISHA Ohta-ku, Tokyo (JP)**

(72) Inventors:
• **Yamamoto, Akira**
  **Ohta-ku**
  **Tokyo (JP)**
• **Kobayashi, Shuichi**
  **Ohta-ku**
  **Tokyo (JP)**

(74) Representative: **Weser, Wolfgang Weser & Kollegen, Patentanwälte, Radeckestrasse 43 81245 München (DE)**

(54) **Scanning display**

(57)　　A scanning display includes plural light sources (101a-d), and a scanner (102) for two-dimensionally scanning a scanning area (103) in a scanning surface from lights from the plural light sources (101a-d), wherein the scanner (102) scans plural partial scanning areas (103a-d) that are arranged in a first direction (104) within a range corresponding to the scanning area (103), by using mutually different lights from the plural light sources (101a-d), the scanner (102) scanning each partial scanning area (103a-d) at a first speed in the first direction (104) and at a second speed higher than the first speed in a second direction (106) different from the first direction (104), and wherein FR ≧ (ω × Z) / (α × Fov) is met, where FR is a scanning frequency (Hz) of the light in the first direction (104) of the partial scanning area, ω is an oculomotor angular speed (°/sec) in a saccade, Z is the number of partial scanning areas arranged in the first direction (104) in the scanning area (103), α is a constant relating to an effective scanning period in one scanning period in the first direction (104), and Fov is an entire view angle (°) in the first direction.

FIG. 1

EP 1 736 811 A1

**Description**

The present invention relates to a scanning display that scans a light in two-dimensional directions and enables a viewer to recognize an image.

Many retinal scanning displays have conventionally been proposed which scan a light beam from a light source in a viewer's retina at a high speed, and enables him to recognize an image by utilizing an afterimage effect. One retinal scanning display synthesizes plural lights from one or more light sources into one beam, and scans the beam, as disclosed in Japanese Patent Application ("JPA") Publication No. 2004-138822. Another type scans plural areas with plural beams, and enables the viewer to recognize one image by connecting partial images of these areas, as disclosed in JPA Domestic Publication No. 2004-527793.

A scanning device that operates at several kHz to several tens kHz is required in order to obtain a high-resolution image by scanning a light beam at a high speed, and such this type of scanning display often uses a MEMS scanning device as a micro-machine manufactured by a semiconductor process.

A higher scanning frequency of the scanning device makes its manufacture difficult. When one image is segmented into plural areas and an individual area is scanned by the plural beams from the plural light sources as disclosed in JPA Domestic Publication No. 2004-527793, a beam moving range per unit time becomes smaller than that of an apparatus that scans one entire screen with one beam as disclosed in JPA Publication No. 2004-138822, thereby lowering the scanning speed required for the beam, and lowering the scanning frequency of the scanning device while maintaining a high resolution.

However, the scanning frequency of the scanning device lowered by segmenting one screen into plural areas would retard the beam scanning speed, and lower the moving speed of the beam spot on the retina. In this case, when the viewer's eyeball moves, e.g., rotates, the oculomotor speed can approximately accord with the spot's moving sped on the retina.

As disclosed in Physiological System, Nr. 5, "Visual System and Acoustic System 1, "Ryukoku University, Satoshi Kobori, http://milan.elec.ryukoku.ac.jp/%7Ekobori/resume/bio/bio5.htm1 ("Reference 1" hereinafter), the human's oculomotor angular speed of the field change reaches 300°/sec to 600°/sec in the saccade, which is an intermittent motion or rapid oculomotor state. Specifically, the saccade means a rapid motion of a human eye from one point of regard to another point of regard. The human processes external world's information by repeating fixation for about 300 milliseconds average (fixing at one point of regard) and saccades of several tens milliseconds.

Therefore, the oculomotor speed in this saccade state can approximately accords with the spot's moving speed on the retina. In that case, since the afterimage effect by the viewer is reduced or gone, part of an image is not recognized or lost and the display image is degraded.

It is an illustrative object of the present invention to reduce a noise of a scanning device in a scanning display that scans two or more scanning areas by using plural light sources and enables one image to be recognized.

A scanning display according to one aspect of the present invention includes plural light sources, and a scanner for two-dimensionally scanning a scanning area in a scanning surface from lights from the plural light sources, wherein the scanner scans plural partial scanning areas that are arranged in a first direction within a range corresponding to the scanning area, by using mutually different lights from the plural light sources, the scanner scanning each partial scanning area at a first speed in the first direction and at a second speed higher than the first speed in a second direction different from the first direction, and wherein $FR \geqq (\omega \times Z) / (\alpha \times Fov)$ is met, where FR is a scanning frequency (Hz) of the light in the first direction of the partial scanning area, $\omega$ is an oculomotor angular speed (°/sec) in a saccade, Z is the number of partial scanning areas arranged in the first direction in the scanning area, $\alpha$ is a constant relating to an effective scanning period in one scanning period in the first direction, and Fov is an entire view angle (°) in the first direction.

An imaging apparatus that includes the above scanning display, an image display system that includes the above scanning display and an image supply unit also constitute another aspect of the present invention.

Other objects and further features of the present invention will become readily apparent from the following description of the preferred embodiments with reference to the accompanying drawings.

FIG. 1 is a schematic view showing a structure of a scanning display according to a first embodiment of the present invention.

FIG. 2 is a schematic view showing an illustrative two-dimensional scanning device.

FIG. 3 is a driving waveform diagram of a scanning device in a low-speed direction according to the first embodiment.

FIG. 4 is a view showing a scanning spot's movement on a retina.

FIG. 5A is a view for explaining a cause of an image drop due to eyeball motions, and FIG. 5B is a view for explaining the image drop.

FIG. 6 is another driving waveform diagram of the scanning device in a low-speed direction according to the first embodiment.

FIG. 7 is still another driving waveform diagram of the scanning device in a low-speed direction according to the first embodiment.

FIG. 8 is a graph of a loudness curve.

FIG. 9 is a view for explaining reciprocating scanning in a high-speed scanning direction of a scanning display according to the second embodiment.

FIG. 10 is a schematic view of a structure of a scanning display according to a sixth embodiment of the present invention.

FIG. 11 is a schematic view of a structure of a scanning display according to a seventh embodiment of the present invention.

FIG. 12 is a table showing parameters of the scanning displays according to the first to seventh embodiments.

FIG. 13 is a view of a head mount display using the scanning display according to one of the embodiments.

FIG. 14 is a video camcorder using an electronic viewfinder using the scanning display according to one of the embodiments.

Referring now to the accompanying drawings, a description will be given of a preferred embodiment of the present invention.

FIRST EMBODIMENT

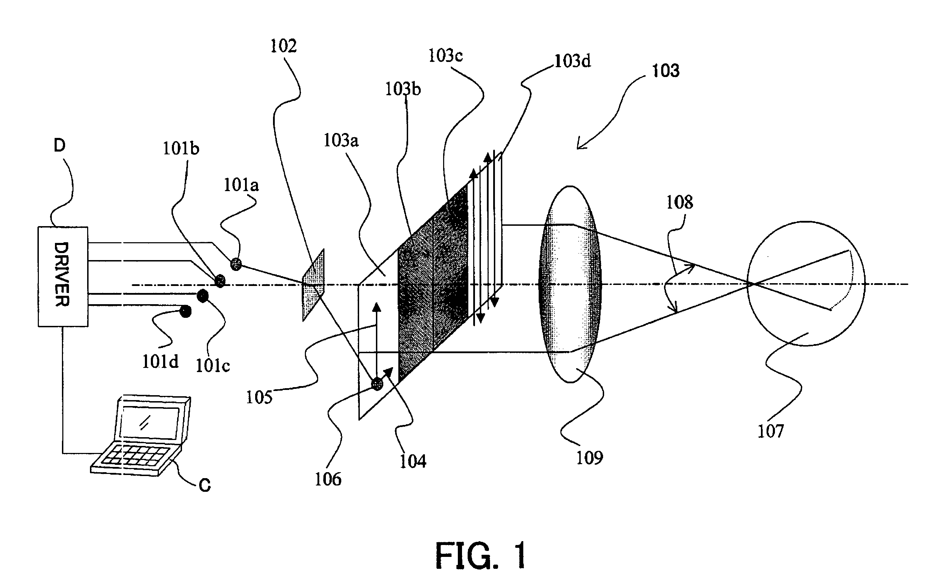

FIG. 1 shows a schematic structure of a scanning display according to a first embodiment of the present invention. The scanning display is used for a head mount display that is attached to a viewer' s head and enables him to view motion and still images. Alternatively, the scanning display may be mounted as electronic viewfinder in a video camcorder and a digital camera.

In FIG. 1, 101a to 101d denote light sources, such as an LED, a laser diode, and a lamp. 102 denotes a scanning device (or a scanner) that scans the lights from the light sources 101a to 101d in two-dimensional directions. The scanning device of this embodiment includes a rotatable plane mirror. 109 denotes an ocular optical system (eyepiece) that magnifies a beam to be scanned by the scanning device 102, and introduces the beam to a viewer's eye or retina 107.

For simplified description, FIG. 1 omits an optical system that converts a divergent light from the light source into an approximately collimated beam, or an optical system that images the beam on a scanned plane 103. This applies to the following embodiments:

Four light sources 101a to 101d are connected to a driver D, which receives an image signal from an image supply unit, such as a personal computer ("PC"), a DVD player, and a VCR. The driver D segments one (field) image into four areas in a horizontal direction, and modulates the lights from four light sources 101a to 101d in accordance with image signals of these four segmented areas. The following embodiments also receive these image signals and control modulations of the light sources.

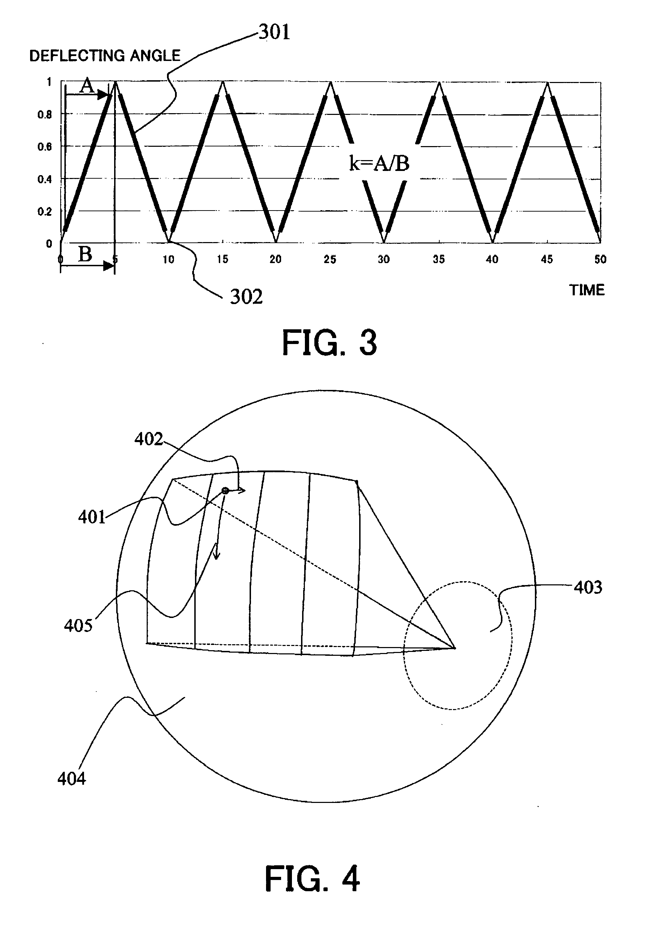

Four beams emitted from the four light sources 101a to 101d form spots on the scanned plane 103 that corresponds to one screen (whole scanning area). Due to the beam deflecting operations of the scanning device 102, four spots 106 (although FIG. 4 shows only one spot) are scanned in the two-dimensional directions (i.e., a horizontal direction 104 and a perpendicular direction 105) in each of the four scanning areas 103a to 103d that are adjacent to each other in the horizontal direction on the scanned plane 103. The four beams that have passed the scanned plane 103 form a spot on the retina in the eye 107 via the ocular optical system (eyepiece) 109. Each spot on the retina moves in the two-dimensional directions as each beam is scanned in the two-dimensional directions.

The viewer can recognize four split images corresponding to four scanned areas 103a to 103d due to the afterimage effect of the four spots. When recognizing the four horizontal split images during a period of the afterimage effect, he can recognize or view one image that connects the four split images. As the ocular optical system (eyepiece) 109 magnifies the four scanning areas 103a to 103d, the viewer can view the image having a predetermined view angle (overall angular field of view) 108 in the horizontal direction.

The scanning device 102 scans the beam in each scanning area at a predetermined speed (or fist speed) in the horizontal direction 104 and at a (second) speed higher than the predetermined direction.

This embodiment uses, for the scanning device 102, a two-dimensional scanning device in which a single device can scan in the two-dimensional directions.

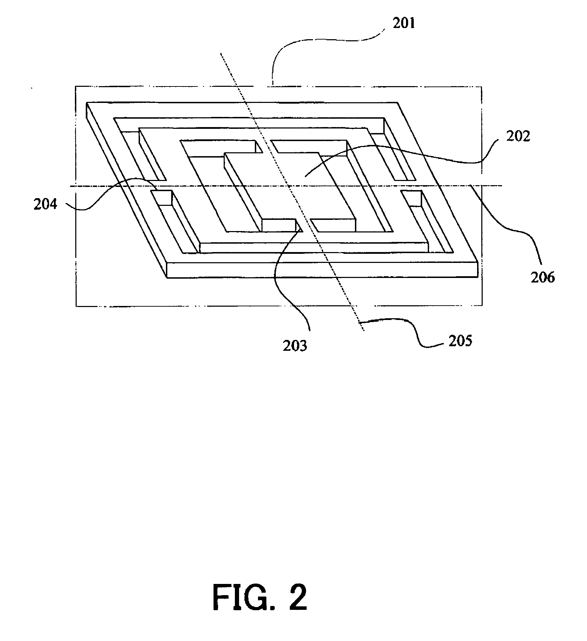

A scanning device 201 shown in FIG. 2 is a micro-electro mechanical systems ("MEMS") device manufactured by the semiconductor process technology. The scanning device 201 is configured such that torsion bars 203 and 204 support a fine mirror 202 including a deflecting plane (reflecting surface). The fine mirror 202 provides resonance reciprocating motions around an axis 205 as an approximate center as the torsion bar 203 twists, and resonance reciprocating motions around an axis 206 as an approximate center as the torsion bar 204 twists. The reciprocating motions around both the axes 205 and 206 as approximate centers two-dimensionally change a normal direction of the deflecting plane of the fine mirror 202. Thereby, a reflecting direction of the beam incident upon the fine mirror 202 changes, and the beam can be scanned in the two-dimensional directions.

Use of such a MEMS device would be able to maintain small the scanning device 102.

Another scanning means may be used instead of the above two-dimensional MEMS scanning device. For example, a combination of two one-dimensional MEMS scanning devices each of which can one-dimensionally scan may be used with their scanning directions different, and a combination of a one-dimensionally scanning, rotational polygon mirror and a one-dimensional MEMS scanning device may be used.

Assume that the scanning frequency is 60 Hz in a horizontal direction as a (low-speed) scanning direction, in which scanning is slower than that in a perpendicular direction, and the whole view angle is 24° in the low-speed scanning direction. Also assume that the fine mirror in the scanning device 102 is driven and reciprocated in a triangle waveform shown in FIG. 3 in the low-speed scanning direction and the viewer's eyeball does not move. Then, a moving angular speed of a spot 401 is 360°/sec in a low-speed scanning direction 402 on a retina 404 in the eyeball shown in FIG. 4. In FIG. 3, the abscissa axis denotes time, and the ordinate axis denotes a deflecting angle of the fine mirror (where 0 denotes one end and 1 denotes the other end in the reciprocating driving). In FIG. 4, 803 denotes a pupil of the eye, and 805 denotes a high-speed scanning direction.

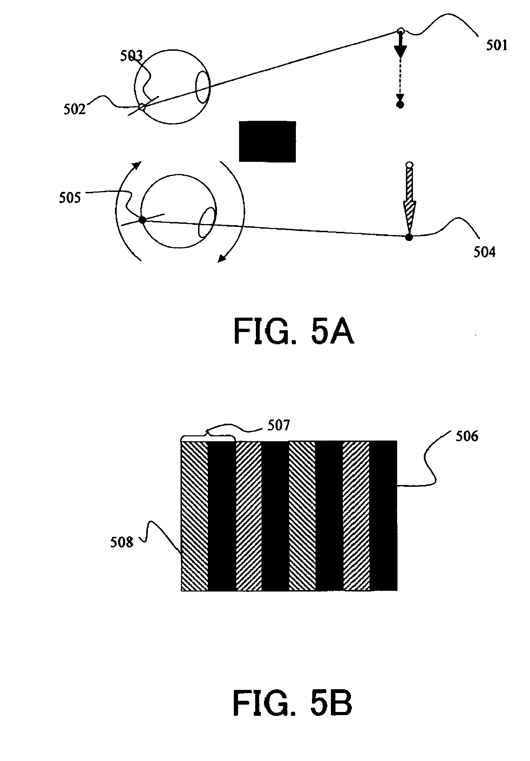

On the other hand, as disclosed in Reference 1, a human's eyeball moves at 300°/sec to 600°/sec in the saccade, and the field of view changes at the same angular speed. When the moving angular speed of a spot 902 on a retina is slower than the field changing angular speed by the saccade as shown in FIG. 5A, the spot 502 appears to relatively stop on the retina or move in the reverse direction. A top view of FIG. 5A shows that the spot 502 corresponding to a spot 501 on the scanned plane at a predetermined time forms at a point 503 on the retina. A bottom view of FIG. 5B shows a position of a spot 505 on the retina as the eyeball rotates in the same direction as the moving direction of a spot 504 on the scanned plane from the state of the top view.

In that case, a viewer does not acquire a continuous afterimage effect, and perceives a loss in an image (image drop) 506 shown in FIG. 5B. The viewer recognizes an image at a position 508 in each scanning area 507, but cannot recognize an image at the position of the loss 506.

In order to eliminate the image drop, the moving angular speed of the spot on the retina should exceed the oculomotor angular speed. The following equation is established where Z is the number of scanning areas arranged in the low-speed scanning direction or an entire angular field of view, Fov is an entire view angle in the low-speed scanning direction, FR is a scanning frequency in the low-speed scanning direction, and Vt is a moving angular speed of the spot on the retina:

$$Vt = Fov / Z \times (\alpha \times FR) \qquad (1)$$

This speed should always exceed the moving angular speed ($\omega$ = 300°/sec to 600°/sec) of the field of view in the saccade state. This embodiment uses the field's maximum moving angular speed of 600°/sec by the saccade, and obtains the following equations:

$$(\alpha \times Fov \times FR) / Z \geqq 600 \ (= \omega);$$

or

$$FR \geqq (600 \times Z) / (\alpha \times Fov) \qquad (2)$$

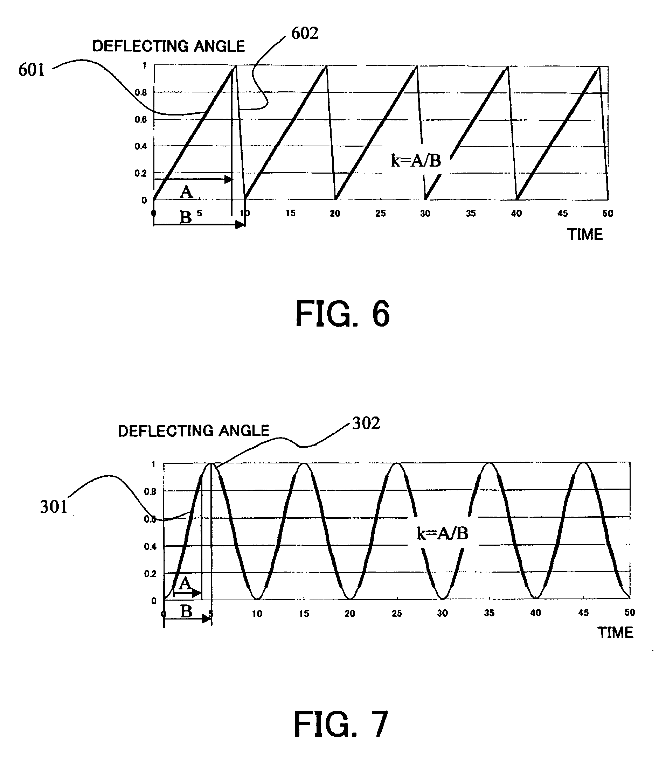

$\alpha$ is a effective scanning period in one "nominal" scanning period of the scanning device 102 in the low-speed scanning direction (where one scanning period is defined as a driving time period starting reciprocation with one end and ending with the one end after reaching the other end) or a constant relating to an effective scanning period. For example, $\alpha = 1 / k$ is met where the fine mirror reciprocates in a saw tooth waveform shown in FIG. 6 in the low-speed scanning direction, while the beam is scanned at a time period 601 shown by a thick line in the outward path, and the beam is stopped during the fly-back time 602 in the return path. $\alpha = 2 / k$ is met where the fine mirror reciprocates in a sine waveform (FIG. 7) and triangle waveform (FIG. 3), while the beam is scanned in a time period 301 shown by a thick line in both the outward and return paths. When the number of continuous scanning on a scanned surface within one period of the scanning device is n $\alpha = n / k$ (whereas n = 1 or 2 in the above examples).

In FIGs. 3, 6 and 7, during time periods 302 and 602 indicated by a thin line, the fine mirror is driven, but none of the light sources emit, and no beam scanning is conducted.

"k" denotes a ratio of an effective scanning period in one "nominal" scanning period, and is also referred to as time use efficiency. In the saw tooth waveform driving shown in FIG. 6, k = A / B is met where A is the effective scanning period in one "nominal" scanning period, and B is one scanning period. In other words, $\alpha$ is a ratio between a light scanning (irradiating or projecting) time period of a scanned surface (or eye) in the nominal scanning period and the nominal scanning period of the fine mirror or scanning device.

A range of k meets $0.5 \leqq k \leqq 1$. A range of $\alpha$ is as follows in accordance with the driving waveform in the low-speed scanning direction:

$$1 \leqq \alpha \leqq 2$$

(saw tooth waveform driving); and

$$2 \leqq \alpha \leqq 4$$

(triangle or sine waveform driving).

When $\alpha$ (or k) becomes lower than the lower limit in the above range, the emitting time period of the light source becomes so short that a viewed image becomes dark and unsuited to practical use.

Where Z = 4, Fov = 24, and $\alpha$ = 2.5 (= 2 / k: time use ratio k = 0.8) in the triangle waveform driving, FR $\geqq$ (600 $\times$ 4) / (2.5 $\times$ 24) = 40 (Hz) is met. Where the scanning frequency in the low-speed scanning direction (or the horizontal direction) is 40 Hz or greater, the image drop is reduced or eliminated. Therefore, this embodiment sets the scanning frequency FR to 50 Hz in the low-speed scanning direction.

While this embodiment sets a value of w in the equation (2) to 600°/sec, any value may be set from a range between 300°/sec and 600°/sec, such as 400°/sec, 500°/sec, 550°/sec, and 800°/sec. These values of $\omega$ may be applied to another embodiment.

In addition, while this embodiment sets both the light sources and scanning areas to four, the present invention does not limit these numbers to four, and may select any number equal to or greater than two. The present invention is not limited to this embodiment in which the number of light sources is equal to the number of scanning areas. The number of light sources may be different from the number of scanning areas. For example, the lights from three-color (or red, green and blue) light sources are synthesized into one beam, and plural composite beams may be used to scan plural scanning areas.

Moreover, while this embodiment arranges four scanning areas adjacently and closely, the present invention may set the scanning areas so that they partially overlap each other.

While this embodiment discusses the head mount display by way of example, the present invention is applicable to a projection apparatus that projects an image on a screen, such as a liquid crystal projector. In applying the present invention to the liquid crystal projector, the entire view angle Fov in the low-speed scanning direction changes according to a projected area on the screen and a distance from a viewer to the screen, but an appropriate value may be set in accordance with the contemplated use state.

SECOND EMBODIMENT

In the second embodiment of the present invention, similar to the first embodiment, the horizontal view angle Fov (or the entire angular field of view in the low-speed scanning direction) is 24°, the horizontal resolution Res is 800 pixels, and twelve scanning areas are arranged in the horizontal direction. The scanning display is configured similar to that of the first embodiment (FIG. 1), and common elements are designated by the same reference numerals as those in the first embodiment.

In the low-speed scanning direction, the scanning device 102 is driven in a sine waveform shown in FIG. 7. The constant $\alpha$ is 2.5 (time use efficiency k = 0.8). In that case, the equation (2) meets FR $\geqq$ (600 $\times$ 12) / (2 / 0.8 $\times$ 24) = 120 (Hz). Therefore, no image drops occur when the scanning frequency in the low-speed scanning frequency is 120 Hz or greater.

A scanning frequency in a perpendicular direction as a high-speed scanning direction in which scanning is faster than that in the horizontal direction needs (scanning) lines of 800 / 12 pixels for 1 / 120 / 2 = 1 / 240 seconds (when an outward path and return path of the reciprocating motion scan different frames), i.e., high-speed scanning at several kHz or greater.

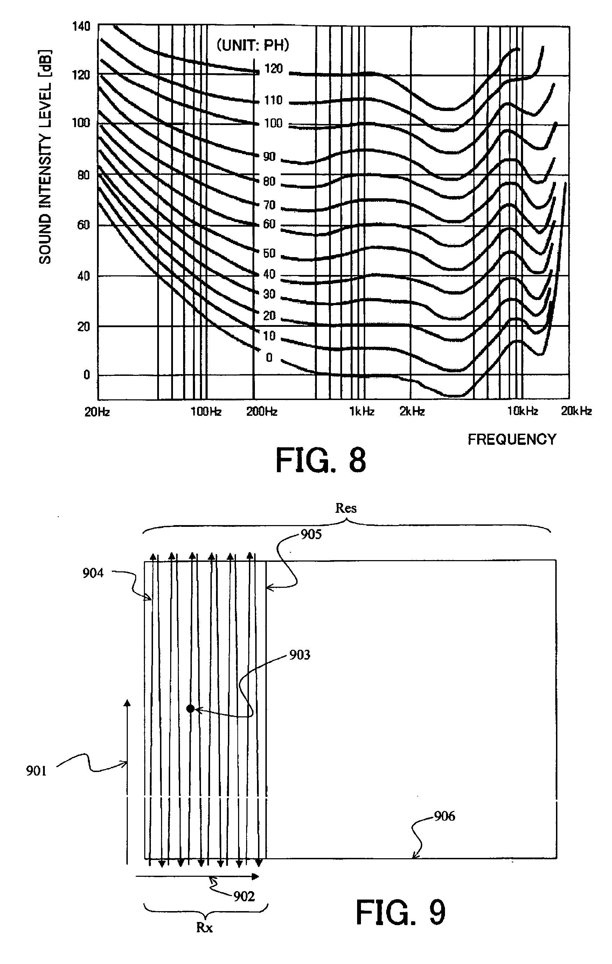

FIG. 8 shows a frequency-response characteristic of a human's acoustic sense, called a loudness curve. Understandably, for example, at a frequency between 1 and 6 kHz a human is particularly sensitive to sounds of 40 dB, which is considered to be a noise in a library.

The scanning frequency of the scanning device 102 approximately accords with the frequency of the noise. A viewer would perceive a noise of the scanning device if it is driven at the neighboring frequency, feeing uncomfortable.

In order to reduce or eliminate the noise, the scanning device 102 should be operated at a high frequency less audible or inaudible to the human ear. More specifically, the viewer is less likely to perceive the noise, when the scanning frequency of the scanning device is set preferably to 10 kHz or greater, more preferably to 15 kHz or greater.

The following conditional equation (3) can make the frequency of the noise generated from scanning driving in the high-speed scanning direction less audible or inaudible to the human ear.

The derivation will be described with reference to FIG. 9, where Freq is a scanning frequency in the high-speed scanning frequency. FIG. 9 shows one scanning area 905 on a scanned plane 906. The scanning area 905 is scanned at a high speed in a perpendicular direction 901, and scanned at a low speed in a horizontal direction 902. 903 denotes a spot on the scanned plane 906, and 904 denotes a locus of the spot 903.

An image resolution Rx in one scanning area is expressed as Rx = Res / Z, where Res is an image resolution on the entire screen in the low-speed scanning direction (horizontal direction), and Z is the number of scanning areas in the low-speed scanning direction. The same number of (scanning) lines is necessary to completely display the resolution Rx (or enable this resolution Rx to be recognized). Then, reciprocating scanning in the high-speed scanning direction or beam scanning in both outward and return paths during one scanning period requires Rx / 2 times high-speed scanning during the beam scanning for one frame image. A scanning time period T for one frame is expressed as T = 1/ ($\alpha \times$ FR), where FR is a scanning frequency in the low-speed scanning direction and $\alpha$ is a constant (which will be discussed later). The scanning frequency Freq in the high-speed scanning direction is expressed as Freq = Rx / 2 $\times$ 1 / T = $\alpha \times$ FR $\times 10^{-3} \times$ {Res / (2 $\times$ Z)} (kHz).

In order for Freq to exceed 10 kHz, the following equation is derived:

$$10 \leqq (\alpha \times Res \times FR) \times 10^{-3} / (2 \times Z) \qquad (3)$$

The equation (3) would restrain the noise from the high-speed scanning. When the conditional equation (3) does not satisfy the lower limit, the noise remains since the noise frequency caused by the high-speed scanning is likely to be audible to the human. In addition, an excessively high frequency of the high-speed scanning would make manufacture of the scanning device difficult. Thus, Freq = ($\alpha \times$ Res $\times$ FR) $\times 10^{-3} / (2 \times Z) \leqq 200$ is met preferably.

Since this embodiment sets Res = 800, $\alpha$ = 2.5, FR = 120, and Z = 12, Freq = ($\alpha \times$ Res $\times$ FR) $\times 10^{-3} / (2 \times Z)$ = 10 (kHz). In other words, the scanning frequency in the high-speed scanning direction becomes 10 kHz, satisfying the above condition. Of course, the scanning frequency in the low-speed scanning direction may be further increased and the scanning frequency in the high-speed frequency direction is made higher, assigning a much higher frequency to the generated noise.

For example, when the scanning frequency in the low-speed scanning direction is set to 150 Hz, ($\alpha \times$ Res $\times$ FR) $\times 10^{-3} / (2 \times Z)$ = 12.5 (kHz) is obtained and the scanning frequency in the high-speed scanning direction can be further increased.

As discussed, this embodiment sets the scanning frequency in the low-speed scanning direction to 150 Hz, and the scanning frequency in the high-speed scanning direction to 12.5 kHz.

THIRD EMBODIMENT

The third embodiment of the present invention discusses a scanning display that sets, similar to the first embodiment, a low-speed scanning direction to the horizontal direction, and the number of pixels in the low-speed scanning direction to 2,160 pixels. Since the minimum resolution of the human eye is about 1 minute, the minimum resolution of the human eye accords with a size of one pixel when the horizontal view angle is 36°. Accordingly, this embodiment sets the horizontal view angle to 36°. The scanning display is configured similar to that of the first embodiment (FIG. 1), and common elements are designated by the same reference numerals as those in the first embodiment.

Assume that plural scanning areas are arranged in the low-speed scanning direction, and the scanning device 102 is driven in a saw tooth waveform in the low-speed scanning direction. Also assume that the frequency FR is 60 Hz, and the constant $\alpha$ is 1.25 (= 1/k: time use efficiency k = 0.8). From the equation (2), the number Z of scanning areas in the horizontal direction meets Z $\leqq$ 3. In other words, when the number of scanning areas in the low-speed scanning direction is 3 or smaller, the image drop is prevented.

If it is assumed that $\alpha$ = 2.5, Res = 2,160, FR = 60, and Z = 3, (a $\times$ Res $\times$ FR) $\times 10^{-3} / (2 \times Z)$ = 27 (kHz) is met, satisfying the equation (3). Thus, the noise from the scanning frequency in the high-speed scanning direction (perpendicular direction) has a frequency less audible to the human.

Thus, this embodiment sets the scanning frequency to 60 Hz in the low-speed scanning direction, the scanning frequency to 27 kHz in the high-speed scanning direction.

FOURTH EMBODIMENT

The fourth embodiment of the present invention discusses a scanning display that sets, similar to the first embodiment, a low-speed scanning direction to the horizontal direction, and has a wide view angle of 80° in the horizontal direction (or the entire angular field of view in the low-speed scanning direction). The scanning display is configured similar to that of the first embodiment (FIG. 1), and common elements are designated by the same reference numerals as those in the first embodiment.

Assume that ten scanning areas are arranged in the low-speed scanning direction, the scanning device 102 is driven in a saw tooth waveform in the low-speed scanning direction, the frequency FR is 40 Hz, the constant $\alpha$ is 2.5 (time use efficiency k = 0.8), and the resolution Res is 3,840 pixels in the low-speed scanning direction. Then, from the equation (2), the scanning frequency Freq in the high-speed scanning direction (perpendicular direction) satisfies FR $\geqq$ 30.0 (Hz). Therefore, use of the scanning frequency of 30.0 Hz or greater in the low-speed scanning direction would reduce or eliminate the image drop.

Nevertheless, actually, since the frequency of 30 Hz can reduce or eliminate the image drop but is likely to cause so-called flickers, which appear as blinking images to the human eyes, a preferable scanning frequency in the low-speed scanning direction is 40 Hz or greater.

If it is assumed that $\alpha$ = 2.5, Res = 3,840, FR = 40, and Z = 10, ($\alpha \times$ Res $\times$ FR) $\times 10^{-3}$ / (2 $\times$ Z) = 19.2 (kHz) is met, satisfying the equation (3). Thus, the noise from the scanning frequency in the high-speed scanning direction has a frequency less audible to the human.

Thus, this embodiment sets the scanning frequency to 40 Hz in the low-speed scanning direction, the scanning frequency to 19.2 kHz in the high-speed scanning direction.

FIFTH EMBODIMENT

The fifth embodiment of the present invention discusses scanning in the perpendicular direction slower than that in the horizontal direction. The scanning display is configured similar to that of the first embodiment (FIG. 1), and common elements are designated by the same reference numerals as those in the first embodiment.

This embodiment sets a horizontal view angle to 80°, and an aspect ratio of the screen to 16: 9. Plural scanning areas are arranged in the low-speed scanning direction as the perpendicular direction, the scanning device 102 is driven in a triangle waveform in the low-speed scanning direction, and the constant $\alpha$ is 2.5 (time use efficiency k = 0.8) in the low-speed scanning direction.

When the number or horizontal pixels is 3,840 pixels, the number of perpendicular pixels is 2,160 pixels, and the perpendicular view angle is 45°. When it is assumed that the number of the scanning areas is 5 in the low-speed scanning direction, the scanning frequency FR in the low-speed scanning direction (or perpendicular direction) meets FR $\geqq$ 26.7 (Hz). Therefore, use of the scanning frequency of 26.7 Hz or greater in the low-speed scanning direction would reduce or eliminate the image drop.

Nevertheless, actually, for the reason described for the fourth embodiment, a preferable scanning frequency in the low-speed scanning direction is 40 Hz or greater.

If it is assumed that $\alpha$ = 2.5, Res = 2,160, FR = 45, and Z = 5, ($\alpha \times$ Res $\times$ FR) $\times 10^{-3}$ / (2 $\times$ Z) = 24.3 (kHz) is met, satisfying the equation (3). Thus, the noise from the scanning frequency in the high-speed scanning direction has a frequency less audible to the human.

Thus, this embodiment sets the scanning frequency to 45 Hz in the low-speed scanning direction, the scanning frequency to 24.3 kHz in the high-speed scanning direction.

SIXTH EMBODIMENT

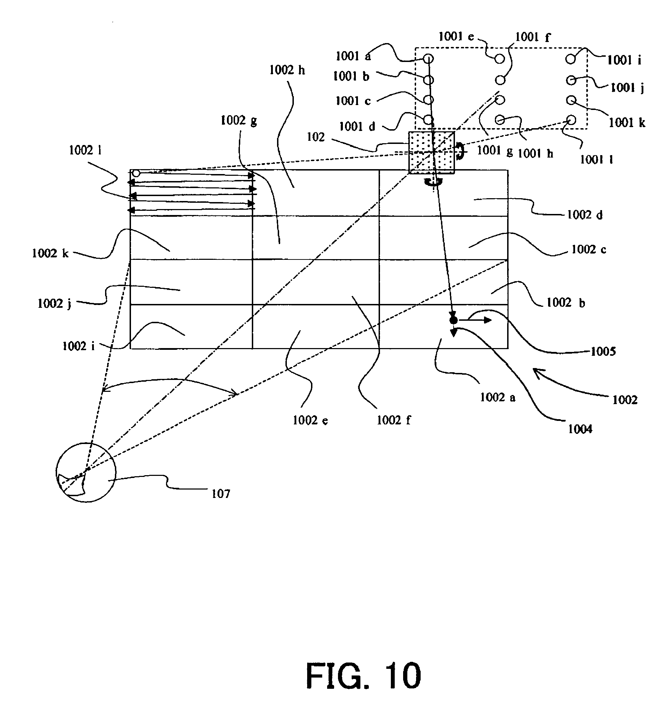

FIG. 10 shows a schematic structure of a scanning display according to a sixth embodiment of the present invention. This embodiment will discuss scanning areas that are arranged two-dimensionally, i.e., like a tile arrangement in the horizontal and perpendicular directions, instead of scanning areas that are arranged one-dimensionally or only in the low-speed scanning direction as in the first to fifth embodiments.

In FIG. 10, 1001a to 10011 denote twelve light sources, such as an LED, a laser diode, and a lamp. 102 denotes a scanning device that two-dimensionally scans the beams from the light sources 1001a to 10011, and uses a two-dimensional MEMS scanning device, similar to the first embodiment.

As described for the first embodiment, FIG. 10 omits an optical system that converts a divergent light from the light source into an approximately collimated beam, an optical system that images the scanned beam on a scanned plane 1002, or an ocular optical system (eyepiece) for magnifying and introducing the scanned plane 1002 to the viewer's eyes.

The scanning device 102 scans plural beams from the light sources 1001a to 10011 in the scanning areas 1002a to 10021. This embodiment sets scanning in the perpendicular direction slower than that in the horizontal direction.

This embodiment sets a horizontal view angle Fov to 120°, and an aspect ratio of the screen to 16: 9. Then, the entire view angle is 67.5° in the perpendicular direction 1004 as the low-speed scanning direction. In addition, the scanning device 102 is driven in saw tooth waveform in the low-speed scanning direction, and the constant $\alpha$ is 1.25 (time use efficiency k = 0.8). Three scanning areas are arranged in the horizontal direction 1005 as the high-speed scanning direction, four scanning areas are arranged in the perpendicular direction as the low-speed scanning direction. In other words, one image is divided into totally 12 scanning areas 1002a to 10021. In that case, the scanning frequency FR in the low-speed scanning direction (perpendicular direction) necessary to reduce or eliminate the image drop should meet FR $\geqq$ 28.4 (Hz). Nevertheless, actually, for the reason described for the fourth embodiment, a preferable scanning frequency in the low-speed scanning direction is 40 Hz or greater.

If it is assumed that the number Res of horizontal pixels is 3,600, $\alpha$ = 1.25, FR = 40, and Z = 5, ($\alpha \times$ Res $\times$ FR) $\times 10^{-3}$ / (2 $\times$ Z) = 22.5 (kHz) is met, satisfying the equation (3). Thus, this embodiment sets the scanning frequency to 40 Hz in the low-speed scanning direction, the scanning frequency to 22.5 kHz in the high-speed scanning direction.

SEVENTH EMBODIMENT

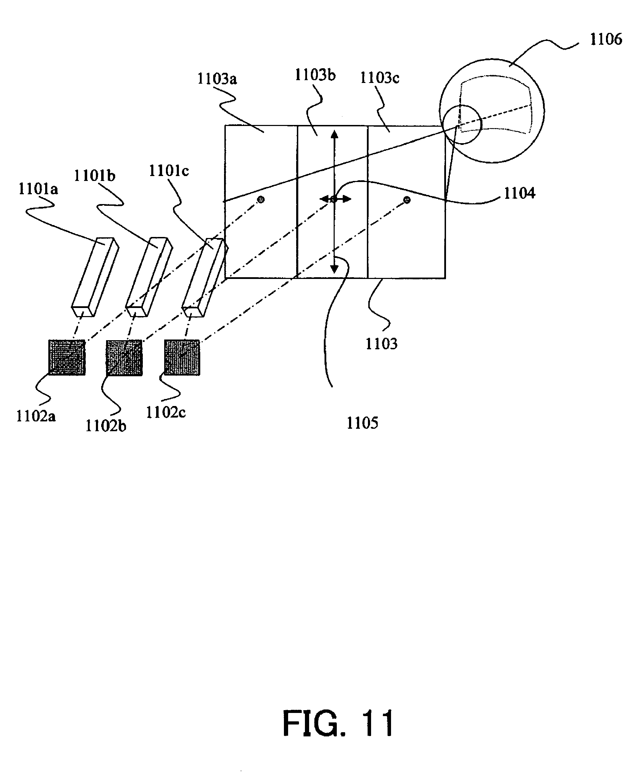

FIG. 11 shows a schematic structure of a scanning display according to a seventh embodiment of the present invention. This embodiment discusses an illustrative scanning display that including plural light sources and corresponding plural scanning devices.

Three beams from three light sources 1101a to 1101c as laser units reach corresponding scanning devices 1102a to 1102c. Each of the three scanning devices 1102a to 1102c scans the beam in two-dimensional directions in scanning areas 1103a to 1103c that are adjacent each other on the scanned plane 1103 in the horizontal direction.

Each beam that has passed the scanned plane 1103 forms a spot on the retina in an eye 1106 via an ocular optical system (eyepiece) which is omitted in FIG. 11, similar to FIG. 10. Each spot on the retina moves in the two-dimensional directions as each beam is scanned in the two-dimensional directions.

Each scanning device scans the incident beam at a predetermined speed in a horizontal direction 1104, and at a higher speed than the predetermined speed in a perpendicular direction 1105.

The viewer can recognize three split images corresponding to three scanned areas 1103a to 1103c due to the afterimage effect of the three spots. When recognizing all of three horizontal split images during a period of the afterimage effect, he can recognize or view one image that connects the three split images. Due to the ocular optical system (eyepiece) (not shown), the viewer can recognize the magnified image.

Assume that the entire view angle is 75° in the low-speed scanning direction (horizontal direction), the number of the image resolution is 3,000 pixels in the low-speed scanning direction, the scanning devices 1102a to 1102c are driven in a sine waveform in the low-speed scanning direction, and $\alpha$ is 2.5 (time use efficiency k = 0.8). Then, FR $\geqq$ 9 (Hz) is met from the equation (2). Therefore, use of the scanning frequency of 9 Hz or greater in the low-speed scanning direction would reduce or eliminate the image drop. Nevertheless, actually, for the reason described for the fourth embodiment, a preferable scanning frequency in the low-speed scanning direction is 40 Hz or greater.

If it is assumed that $\alpha$ = 2.5, Res = 3,000, FR = 40, and Z = 3, ($\alpha \times$ Res $\times$ FR) $\times 10^{-3}$ / (2 $\times$ Z) = 50 (kHz) is met, satisfying the equation (3). Thus, the noise from the scanning frequency in the high-speed scanning direction (perpendicular direction) has a frequency less audible to the human.

Thus, this embodiment sets the scanning frequency to 40 Hz in the low-speed scanning direction, the scanning frequency to 50 kHz in the high-speed scanning direction.

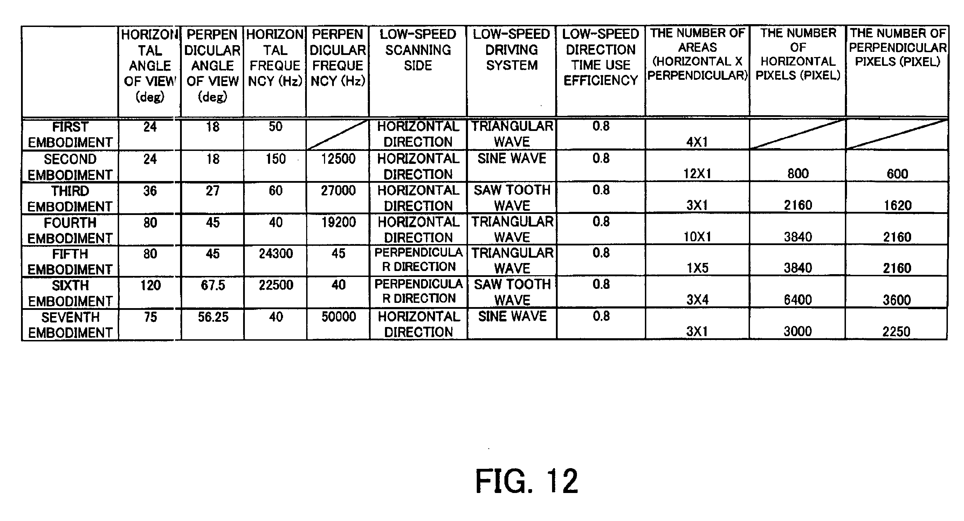

FIG. 12 lists parameters of the scanning displays according to each embodiment.

As discussed above, each embodiment sets the scanning frequency FR, the number Z of scanning areas, the constant $\alpha$, and the entire view angle Fov, degradation of the recognized image quality is prevented and high image quality can be maintained.

EIGHTH EMBODIMENT

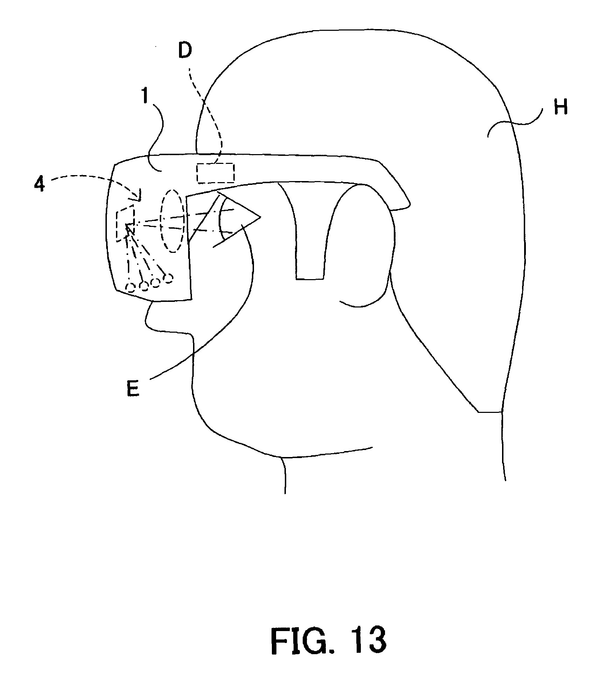

FIG. 13 is a head mount display that uses a scanning display described in any one of the first to seventh embodiments. The head mount display 1 is mounted on the viewer's head H and used like glasses. A display body in which the scanning display 4 is installed is arranged before the viewer's eyes E. Although not shown, one scanning display 4 is assigned to each viewer's eye.

The head mount display 1 is mounted with a driver D also shown in FIG. 1, which is connected to an image supply unit (see FIG. 1).

A beam emitted from the scanning display 14 scans the retina in the viewer's eyes E in accordance with the image signal from the image supply unit.

NINTH EMBODIMENT

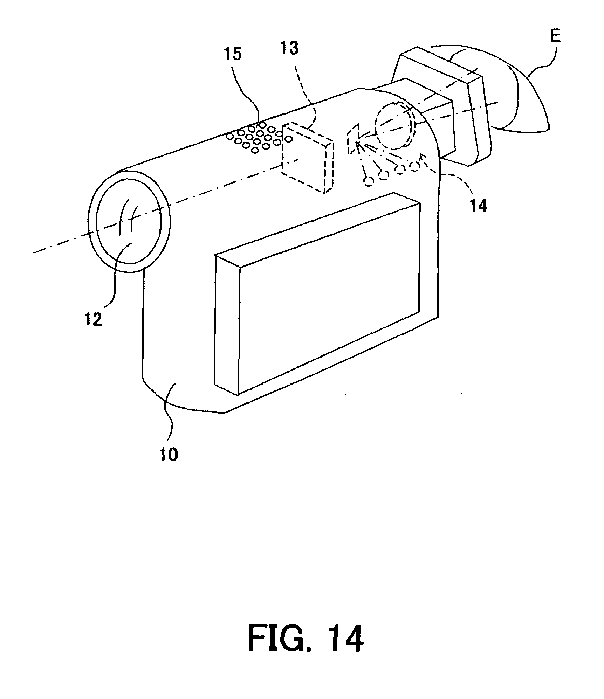

FIG. 14 shows a video cam encoder using a scanning display described in one of the first to seventh embodiments. The video camcorder 10 includes an image taking lens 12, an image pickup device 13, such as a CCD sensor and a CMOS sensor, which photoelectrically converts a subject image formed by the image taking lens 12, and a microphone 15 that records a sound during recording.

The video camcorder 10 further includes a scanning display 14 as an electronic viewfinder for enabling a viewer to view an image obtained by the image pickup device 13.

The viewer (or photographer) can view the subject or confirm the shot image when a beam emitted from the scanning display 14 scans the retina in the viewer's eye E in accordance with the image signal obtained from the image pickup device 13.

This application claims a foreign priority benefit based on Japanese Patent Applications No. 2005-179929, filed on June 20, 2005, which is hereby incorporated by reference herein in its entirety as if fully set forth herein.

## Claims

1. A scanning display comprising:

   plural light sources; and
   a scanner for two-dimensionally scanning a scanning area in a scanning surface from lights from the plural light sources,

   wherein said scanner scans plural partial scanning areas that are arranged in a first direction within a range corresponding to the scanning area, by using mutually different lights from the plural light sources, said scanner scanning each partial scanning area at a first speed in the first direction and at a second speed higher than the first speed in a second direction different from the first direction, and
   wherein $FR \geqq (\omega \times Z) / (\alpha \times Fov)$ is met, where FR is a scanning frequency (Hz) of the light in the first direction of the partial scanning area, $\omega$ is an oculomotor angular speed (°/sec) in a saccade, Z is the number of partial scanning areas arranged in the first direction in the scanning area, $\alpha$ is a constant relating to an effective scanning period in one scanning period in the first direction, and Fov is an entire view angle (°) in the first direction.

2. A scanning display according to claim 1, wherein $\omega$ is between 300 and 600.

3. A scanning display according to claim 2, wherein $\omega$ is 600.

4. A scanning display according to any one of claims 1 to 3, wherein $FR \geqq 40$ is met.

5. A scanning display according to any one of claims 1 to 4, wherein $10 \leqq (\alpha \times Res \times FR) \times 10^{-3} / (2 \times Z)$ is met, where Res is a resolution of an image in the first direction.

6. A scanning display according to any one of claims 1 to 5, wherein said scanning display scans the lights relative to eyes of a viewer.

7. An image pickup apparatus comprising a scanning display according to any one of claims 1 to 6 for displaying a captured image.

8. An image display system comprising:

   a scanning display according to any one of claims 1 to 6; and
   an image supply unit for supplying an image signal to said scanning display.

FIG. 1

EP 1 736 811 A1

FIG. 2

11

DEFLECTING ANGLE

301

302

k=A/B

TIME

**FIG. 3**

402

401

405

404

403

**FIG. 4**

FIG. 5A

FIG. 5B

DEFLECTING ANGLE

601

602

k=A/B

TIME

A

B

## FIG. 6

DEFLECTING ANGLE

302

301

k=A/B

A

B

TIME

## FIG. 7

FIG. 8

FIG. 9

FIG. 10

FIG. 11

| | HORIZONTAL ANGLE OF VIEW (deg) | PERPENDICULAR ANGLE OF VIEW (deg) | HORIZONTAL FREQUENCY (Hz) | PERPENDICULAR FREQUENCY (Hz) | LOW-SPEED SCANNING SIDE | LOW-SPEED DRIVING SYSTEM | LOW-SPEED DIRECTION TIME USE EFFICIENCY | THE NUMBER OF AREAS (HORIZONTAL X PERPENDICULAR) | THE NUMBER OF HORIZONTAL PIXELS (PIXEL) | THE NUMBER OF PERPENDICULAR PIXELS (PIXEL) |
|---|---|---|---|---|---|---|---|---|---|---|
| FIRST EMBODIMENT | 24 | 18 | 50 | | HORIZONTAL DIRECTION | TRIANGULAR WAVE | 0.8 | 4X1 | | |
| SECOND EMBODIMENT | 24 | 18 | 150 | 12500 | HORIZONTAL DIRECTION | SINE WAVE | 0.8 | 12X1 | 800 | 600 |
| THIRD EMBODIMENT | 36 | 27 | 60 | 27000 | HORIZONTAL DIRECTION | SAW TOOTH WAVE | 0.8 | 3X1 | 2160 | 1620 |
| FOURTH EMBODIMENT | 80 | 45 | 40 | 19200 | HORIZONTAL DIRECTION | TRIANGULAR WAVE | 0.8 | 10X1 | 3840 | 2160 |
| FIFTH EMBODIMENT | 80 | 45 | 24300 | 45 | PERPENDICULAR DIRECTION | TRIANGULAR WAVE | 0.8 | 1X5 | 3840 | 2160 |
| SIXTH EMBODIMENT | 120 | 67.5 | 22500 | 40 | PERPENDICULAR DIRECTION | SAW TOOTH WAVE | 0.8 | 3X4 | 6400 | 3600 |
| SEVENTH EMBODIMENT | 75 | 56.25 | 40 | 50000 | HORIZONTAL DIRECTION | SINE WAVE | 0.8 | 3X1 | 3000 | 2250 |

FIG. 12

EP 1 736 811 A1

# FIG. 13

FIG. 14

**European Patent Office**

**EUROPEAN SEARCH REPORT**

Application Number

EP 06 01 2564

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/085617 A1 (HELSEL MARK P ET AL) 6 May 2004 (2004-05-06) * abstract * * paragraphs [0070] - [0103] * * figures 6-15 * | 1-8 | INV. G02B26/08 G02B26/10 |
| X | US 2004/179254 A1 (LEWIS JOHN R ET AL) 16 September 2004 (2004-09-16) * abstract * * paragraphs [0072] - [0099] * * figures 6-15 * | 1-8 | |
| A | US 2003/015652 A1 (KANDORI ATSUSHI ET AL) 23 January 2003 (2003-01-23) * abstract * * paragraphs [0067] - [0079] * | 1-8 | |
| A | US 5 629 790 A (NEUKERMANS ET AL) 13 May 1997 (1997-05-13) * abstract * * column 11, line 35 - line 62 * | 1-8 | |
| A | US 6 243 186 B1 (MELVILLE CHARLES D) 5 June 2001 (2001-06-05) * abstract * * column 1, line 33 - line 50 * * column 5, line 49 - column 6, line 60 * * figure 6 * | 1-8 | TECHNICAL FIELDS SEARCHED (IPC) G02B |
| A | US 5 467 104 A (FURNESS, III ET AL) 14 November 1995 (1995-11-14) * abstract * * column 2, paragraph 1 * * figures 1-4 * | 1-8 | |

The present search report has been drawn up for all claims

| Place of search | Date of completion of the search | Examiner |
|---|---|---|
| Berlin | 24 August 2006 | Moroz, A |

## ANNEX TO THE EUROPEAN SEARCH REPORT
## ON EUROPEAN PATENT APPLICATION NO.

EP 06 01 2564

This annex lists the patent family members relating to the patent documents cited in the above-mentioned European search report.
The members are as contained in the European Patent Office EDP file on
The European Patent Office is in no way liable for these particulars which are merely given for the purpose of information.

24-08-2006

| Patent document cited in search report | | Publication date | Patent family member(s) | | Publication date |
|---|---|---|---|---|---|
| US 2004085617 | A1 | 06-05-2004 | NONE | | |
| US 2004179254 | A1 | 16-09-2004 | NONE | | |
| US 2003015652 | A1 | 23-01-2003 | JP | 2002365568 A | 18-12-2002 |
| US 5629790 | A | 13-05-1997 | US | 5488862 A | 06-02-1996 |
| US 6243186 | B1 | 05-06-2001 | NONE | | |
| US 5467104 | A | 14-11-1995 | AT | 187273 T | 15-12-1999 |
| | | | AU | 5299193 A | 09-05-1994 |
| | | | CA | 2147634 A1 | 28-04-1994 |
| | | | DE | 69327173 D1 | 05-01-2000 |
| | | | DE | 69327173 T2 | 06-07-2000 |
| | | | DK | 665974 T3 | 29-05-2000 |
| | | | EP | 0665974 A1 | 09-08-1995 |
| | | | ES | 2142881 T3 | 01-05-2000 |
| | | | GR | 3032837 T3 | 31-07-2000 |
| | | | JP | 3435160 B2 | 11-08-2003 |
| | | | JP | 8502372 T | 12-03-1996 |
| | | | PT | 665974 T | 31-05-2000 |
| | | | WO | 9409472 A1 | 28-04-1994 |
| | | | US | 5596339 A | 21-01-1997 |
| | | | US | 5659327 A | 19-08-1997 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004138822 A
- JP 2004527793 A

- JP 2005179929 A